# EUROPÄISCHE PATENTSCHRIFT

(11) **EP 0 467 070 B1**
(45) Veröffentlichungstag und Bekanntmachung des Hinweises auf die Patenterteilung: **14.12.1994**
(21) Anmeldenummer: 91109647.7
(22) Anmeldetag: 12.06.1991
(51) Int. Cl.: F16B 31/02, F16B 25/00, F16B 43/00, E04D 3/36, F16B 35/06

(54) **Schraube aus einem Schaft mit grosser Gewindesteigung und einem Schraubenkopf, zum Eindrehen in einen Unterbau geringer Auszugsfestigkeit**
Screw with a shaft with a large pitch and a screwhead to be screwed into a support with a low pull-out resistance
Vis d'une tige à grand pas de filetage et d'une tête de vis, à poser dans un support à faible résistance d'extraction

(30) Priorität: 15.06.1990 DE 4019157
(43) Veröffentlichungstag der Anmeldung: 22.01.1992
(73) Patentinhaber: SFS Industrie Holding AG, 9435 Heerbrugg (CH)
(72) Erfinder: Palm, Erich, W-9435 Heerbrugg (DE)
(74) Vertreter: Ludescher, Hans

(56) Entgegenhaltungen:
- EP-A- 0 129 404
- AU-B- 452 779
- BE-A- 549 987
- DE-U- 9 000 761
- DE-U- 9 006 351
- DE-U- 9 100 658
- FR-A- 1 118 984
- US-A- 2 833 325
- US-A- 4 006 661
- US-A- 4 749 319

## Beschreibung

Die Erfindung betrifft eine Schraube aus einem Schaft mit großer Gewindesteigung und einem Schraubenkopf, zum Eindrehen in einen Unterbau geringer Auszugsfestigkeit, z.B. in Gasbeton, für die direkte Befestigung einer Unterlage in Form von Platten oder Profilschienen auf dem Unterbau oder für die indirekte Befestigung von Dicht- und/oder Isolierbahnen und/oder -platten unter Einsatz einer Unterlage in Form von großflächigen Unterlegscheiben auf dem Unterbau (DE-U-9100658.9).

Es sind eine Vielzahl von Lösungen bekannt geworden, durch welche die Losdrehsicherheit von Schrauben erhöht werden soll. In der Regel sind dies an der Unterseite eines Schraubenkopfes annähernd sägezahnförmig ausgebildete Rippen, welche in Ausdrehrichtung der Schrauben in das unter dem Schraubenkopf befindliche Material eingreifen. Solche Ausführungen sind beispielsweise aus der US-A-25 58 379, der DE-A-30 15 078, der DE-A-26 10 747, der DE-B-17 50 063, der US-A-29 65 146 und der US-A-18 85 761 bekannt.

Auch ist bereits eine Schraube bekannt geworden (GB-A-14 34 301), welche einen Schaft mit relativ großer Gewindesteigung aufweist, wobei diese Schraube in einen Metalluntergrund eingeschraubt wird. An der Unterseite des kegelstumpfförmigen Schraubenkopfes ist eine ringförmige Schneide vorgesehen, um den Schraubenkopf beim Eindrehen zu versenken. Diese Ausführung wirkt aber nicht im Sinne einer Losdrehsicherung, und außerdem sind bei einem derartigen Einsatz nicht die Probleme gegeben, die sich beim Einschrauben in einen Unterbau geringer Auszugsfestigkeit, z.B. in Gasbeton, ergeben.

Weiters ist eine Schraube bekannt geworden, welche im Zusammenwirken mit einer Klemmplatte zur Befestigung von Isolierbahnen auf einem Dach dient. Bei dieser Schraube sind an der Unterseite des Schraubenkopfes Vorsprünge vorgesehen, welche sich in eine Ansenkung an der Klemmplatte eingraben, um dadurch ein Ausdrehen der Schraube im Hinblick auf die Klemmplatte zu verhindern.

Es ist auch bereits eine Schraube der eingangs genannten Art bekannt geworden (AT-B-389.923), welche eben speziell zum Eindrehen in einen Unterbau geringer Auszugsfestigkeit, z.B. in Gasbeton, ausgeführt ist. Gerade bei solchen Schrauben und diesem Einsatzzweck kommt es sehr wesentlich darauf an, daß die Schraube beim Eindrehen nicht überdreht wird, da dann das in den Unterbau geringer Auszugsfestigkeit eingeschnittene bzw. eingeformte Gewinde sofort zerstört wird. Zusätzlich ergibt sich hier das Problem, daß durch die große Gewindesteigung bereits ein Überdrehen in einem geringen Winkelbereich zum Ausreißen des Gewindes führt. Es müssen daher solche Schrauben sehr gefühlvoll eingeschraubt werden, so daß bisher kaum die Möglichkeit bestanden hat, Schrauber z.B. mit Drehmomentkupplungen einzusetzen. Auf der einen Seite bedarf es doch eines entsprechenden Drehmomentes, um die Schrauben überhaupt in den Untergrund einzudrehen, auf der anderen Seite muß aber unmittelbar und exakt nach dem fertigen Setzen eine weitere Drehung verhindert werden.

Die vorliegende Erfindung hat sich daher zur Aufgabe gestellt, eine Schraube der eingangs genannten Art zu schaffen, mit der das Eindrehmoment im unmittelbaren Festziehbereich für die Schraube wesentlich erhöht werden kann, um dadurch eine mechanische oder elektronische Drehmomentkupplung des Schraubers auszulösen, ohne daß die Gefahr eines Überdrehens der Schraube in dem Unterbau geringer Auszugsfestigkeit gegeben ist.

Zur Lösung dieser Aufgabe wird erfindungsgemäß vorgeschlagen, daß der Schraubenkopf an seiner Außenbegrenzung an einem zylinderförmigen Axialabschnitt eine in das Material der Unterlage eingreifende Rändelung bzw. Zähne aufweist, welche beim unmittelbaren Kontakt mit der Unterlage das Eindrehmoment der Schraube plötzlich stark erhöht bzw. erhöhen.

Durch diese erfindungsgemäßen Maßnahmen wird erreicht, daß das Drehmoment beim Eindrehen der Schraube unmittelbar bei der gegenseitigen Berührung der Unterseite des Schraubenkopfes mit dem zu befestigenden Teil bzw. mit der Unterlegscheibe derart erhöht wird, so daß eine Drehmomentkupplung unmittelbar auslöst. Es kann also das üblicherweise zum Eindrehen der Schraube in den Untergrund notwendige Drehmoment plötzlich stark erhöht werden, ohne daß diese Drehmomenterhöhung von dem in den Unterbau eingreifenden Gewinde hervorgerufen wird, und ohne daß es dabei einer plötzlichen, totalen Drehsperre der Schraube bedarf. Je nach Art der Rändelung oder der Zähne kann dadurch erreicht werden, daß über nur einen Bruchteil einer ganzen Umdrehung der Schraube das Drehmoment so stark überhöht wird, daß eine Drehmomentkupplung an der Schraubeinrichtung unmittelbar auslöst.

Bei der Befestigung von Platten oder Profilschienen an einem Unterbau ergibt sich diese starke Erhöhung des Eindrehmomentes sobald der Schraubenkopf zur Anlage kommt. In gleicher Weise geschieht dies beim Einsatz von großflächigen Unterlegscheiben, welche gegenüber den zu befestigenden Dicht- und/oder Isolierbahnen und/oder -platten infolge der großen Anlagefläche oder durch Profilierungen an deren Unterseite gegenüber den Bahnen und/oder Platten nicht verdrehbar sind. Die Unterlegscheibe kann also nicht mit der Schraube mitdrehen, und somit ergibt sich zwischen der Schraube und der Unterlegscheibe bei erfindungsgemäßer Ausbildung diese starke Drehmomenterhöhung.

Bei den bekannten Ausführungen ist also immer darauf hingearbeitet worden, das Ausdrehmoment zu erhöhen, also eine Verriegelung des Schraubenkopfes in der eingesetzten Position zu erreichen. Die erfindungsgemäßen Maßnahmen zielen im Gegensatz dazu darauf ab, das Eindrehmoment im unmittelbar letzten Abschnitt des Einschraubvorganges derart zu erhöhen, daß die Drehmomentkupplung eines Schraubers auslöst.

Bei einer Rändelung am Schraubenkopf löst dies beim Eingreifen in die Senköffnung einer Unterlegscheibe oder eines zu befestigenden Profils bzw. einer Platte eine entsprechende Reibungskraft aus, die ein plötzliches Erhöhen des Eindrehmomentes bewirkt.

Es ist bereits eine Schraube mit einem Gewinde üblicher Gewindesteigung bekannt (AU-B 452 779), welche für den Einsatz bei einem Unterbau geringer Auszugsfestigkeit, z.B. in Gasbeton, nicht geeignet ist. Diese Ausführung sieht am Umfangsbereich bzw. an der Unterseite des Schraubenkopfes eine Profilierung in Form eines Fräsers vor. Mit einer solchen Ausbildung des Schraubenkopfes soll ein gegenüber dem Schraubenschaft größeres Loch ausgefräst werden, um dadurch den Schraubenkopf versenken zu können. Eine plötzliche Erhöhung des Eindrehmomentes ist hier gar nicht erwünscht, denn es soll ja der Fräsvorgang nicht abgebrochen werden. Bei dieser Ausgestaltung sind am Umfang des Schraubenkopfes Einbuchtungen vorgesehen, die jedoch keinesfalls eine Art Rändelung bzw. Zähne bilden, denn diese Einbuchtungen dienen ausschließlich zum leichteren Abtransport der beim Fräsvorgang gebildeten Späne.

Bei einem anderen bekannten Schraubenkopf (FR-A 11 18 984) sind am Außenumfang eines besonderes Bereiches gekerbte bzw. gezahnte Teilflächen vorgesehen, die gegebenenfalls dazu dienen können, eine Verdrehsicherung einer Schraube beim Anziehen der am anderen Ende vorgesehenen Mutter zu erreichen. Eine solche Schraube wird lediglich auf Zug belastet. Es kann daraus auch keine Anregung bezüglich einer drehmomentabhängigen Abschaltung einer Antriebseinrichtung entnommen werden.

In diesem Zusammenhang ist es auch zweckmäßig, wenn ein als Senkkopf ausgebildeter Schraubenkopf an seinem Übergangsrand vom kegelstumpfförmigen Abschnitt zum ebenen Kopfende hin eine achsparallel zur Schraubenachse ausgerichtete Rändelung aufweist. Gerade bei einer Senkkopfschraube lassen sich solche Rändelungen in konstruktiv einfacher Art herstellen. Eine solche Rändelung an diesem relativ schmalen, sich in axialer Richtung erstreckenden Bereich bewirkt ein ausgezeichnetes Eingreifen des Schraubenkopfes in den Bereich der Ansenkung im zu befestigenden Teil bzw. in der Unterlegscheibe.

Es ist in diesem Zusammenhang auch möglich, daß ein als Senkkopf ausgebildeter Schraubenkopf an seinem freien Ende einen tellerartigen Flansch aufweist, welcher an seinem Außenumfang eine Rändelung oder Zähne aufweist. Je nach Art der Ansenköffnung im zu befestigenden Teil bzw. in der Unterlegscheibe kann eine besondere Konstruktion von Vorteil sein.

Zur Verbesserung des Eingriffes kann ferner beitragen, wenn die frei radial auskragenden Enden der Rändelerhebungen scharfkantige Schneiden bilden.

Bei der Fertigung des Schraubenkopfes kann bereits vorgesehen werden, daß die Rändelerhebungen die Mantelfläche des Senkkopfbereiches bzw. die Unterseite des tellerartigen Flansches bzw. die Unterseite des Schraubenkopfes geringfügig überragen. Es greifen dadurch die einzelnen, in axialer Richtung nach unten ragenden Spitzen der Rändelerhebungen kräftig in die Ansenkung des zu befestigenden Bauteiles bzw. die Ansenköffnung der Unterlegscheibe ein.

Eine vorteilhafte Ausführung liegt darin, wenn der Öffnungswinkel einer Senköffnung in einer zu befestigenden Platte oder Profilschiene oder in einer Unterlegscheibe kleiner ist als der Winkel des Senkkopfes des Schraubenkopfes, wobei die Senköffnung vorzugsweise gleich oder kleiner als 90° ist. Es kann dadurch ein noch besserer Eingriff zwischen dem Schraubenkopf und der Wand der Senköffnung erzielt werden, und zwar insbesondere dann, wenn am Umfangsbereich des Schraubenkopfes eine entsprechende Rändelung vorhanden ist.

Gerade dann, wenn der Öffnungswinkel der Senköffnung in einer zu befestigenden Platte oder Profilschiene oder in einer Unterlegscheibe gleich oder kleiner als 90° ist, ist ein noch rascherer Eingriff einer Umfangsrändelung am Schraubenkopf gewährleistet.

Weitere erfindungsgemäße Merkmale und besondere Vorteile werden in der nachstehenden Beschreibung anhand der Zeichnungen noch näher erläutert. Es zeigen:
Fig. 1 eine erfindungsgemäße Schraube im Einsatz zusammen mit einer Unterlegscheibe, wobei die Schraube in einen Unterbau geringer Auszugsfestigkeit eingeschraubt ist;
Fig. 2 den Kopf der Schraube nach Fig. 1 in einem Schnitt dargestellt;
Fig. 3 eine Seitenansicht des Kopfes;
Fig. 4 eine Draufsicht auf den Schraubenkopf der Schraube nach Fig. 1;
Fig. 5 ebenfalls eine Draufsicht auf den Schraubenkopf mit veränderter Anordnung einer Rändelung;
Fig. 6 eine vergrößerte Darstellung gemäß Fig. 1;
Fig. 7 eine Seitenansicht eines Schraubenkopfes einer weiteren Ausführungsform;
Fig. 8 eine Draufsicht auf den Schraubenkopf gemäß Fig. 7.

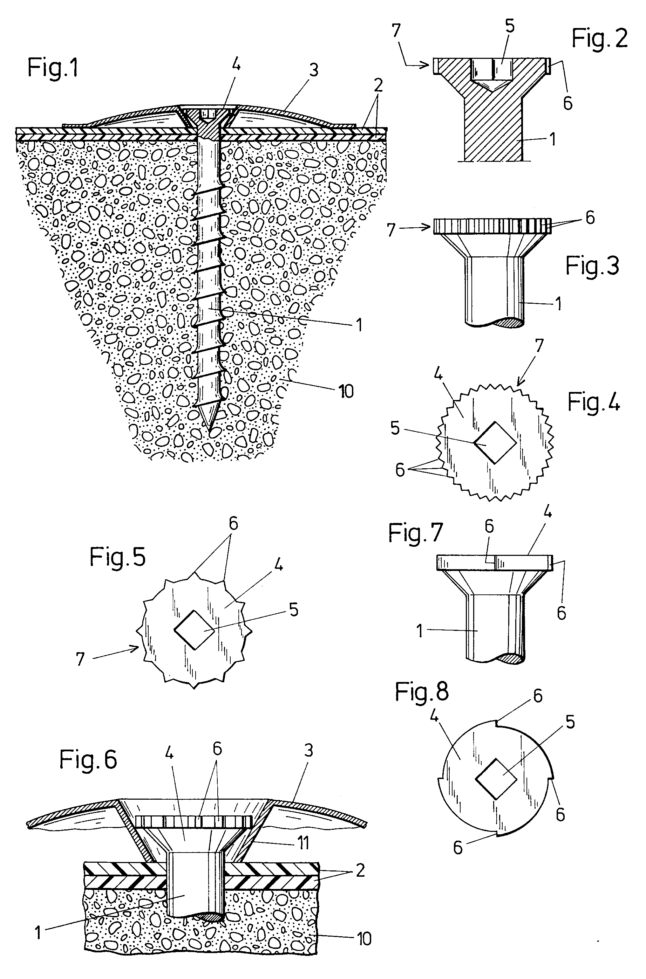

In Fig. 1 ist eine Schraube mit einem Schaft 1 mit großer Gewindesteigung und einem Schraubenkopf 4 dargestellt, welche zum Eindrehen in einen Unterbau 10 geringer Auszugsfestigkeit, z. B. in Gasbeton, dient. Es sollen hier Platten oder Profilschienen oder aber Dichtbahnen 2 und/oder Isolierbahnen und/oder -platten direkt unter Einsatz großflächiger Unterlegscheiben auf dem Unterbau 10 befestigt werden. Dieser Unterbau 10 ist aus Gasbeton gebildet, wobei mit einer derartigen Schraube auch eine Befestigung in einem Unterbau 10 aus einem anderen Material geringer Auszugsfestigkeit möglich ist. Die hier vorgesehene Unterlegscheibe 3 weist eine Senköffnung auf, in welcher der Schraubenkopf 4 nach dem Einschrauben versenkt angeordnet ist.

Bei den Ausführungen nach den Fig. 1 bis 6 ist am Umfangsbereich 7 des Schraubenkopfes an einem zylinderförmigen Axialabschnitt eine Rändelung 6 und im Schraubenkopf eine Öffnung 5 zum Einsetzen eines Schraubwerkzeuges vorgesehen.

Der Schraubenkopf 4 ist als Senkkopf ausgebildet und weist an seinem Übergangsrand vom kegelstumpfförmigen Abschnitt zum ebenen Kopfende hin eine Rändelung 6 auf, wobei diese Rändelung 6 achsparallel zur Schraubenachse ausgerichtet ist. Die frei radial auskragenden Enden der Rändelerhebungen 6 bilden scharfkantige Schneiden. Wie insbesondere der Fig. 2 entnommen werden kann, überragt die Rändelung die Mantelfläche des Senkkopfbereiches geringfügig, so daß beim Eindrehen der Schraube an der Begrenzung 11 der Senköffnung in der Unterlegscheibe 3 ein noch besserer Eingriff bewirkt wird.

Zum Eindrehen der Schraube wird ein entsprechendes Drehmoment benötigt, da die Schraube ohne Vorbohren in den Unterbau 10 eingedreht werden soll. Es darf aber beim Festziehen der Schraube keinesfalls zu einem Überdrehen kommen, da das Gewinde im Unterbau 10 geringer Auszugsfestigkeit dann sofort überdreht und der gesetzte Befestiger die Wirksamkeit verlieren würde. Durch die hier an der Außenbegrenzung des Schraubenkopfes 4 vorgesehene Rändelung 6 wird erreicht, daß das Eindrehmoment der Schraube im unmittelbar letzten Bereich stark erhöht wird, da sich die Rändelung 6 an der Innenbegrenzung der Senköffnung in der Unterlegscheibe 3 eingräbt. Das Drehmoment wird dadurch praktisch in einer nur geringfügigen Winkelverdrehung so stark erhöht, daß eine im Schraubwerkzeug eingesetzte Drehmomentkupplung sofort anspricht. Daher ist ein einwandfreies Setzen von Schrauben in einem Unterbau 10 geringer Auszugsfestigkeit gewährleistet. Dabei ist natürlich Voraussetzung, daß die Reibung bzw. die kraft- und/oder formschlüssige Halterung der zu befestigenden Platte oder Profilschiene gegenüber dem Unterbau bzw. der großflächigen Unterlegscheibe gegenüber den zu befestigenden Bahnen und/oder Platten größer ist als das der Schraube gegenüber dem zu befestigenden Teil bzw. der Unterlegscheibe entgegenwirkende, überhöhte Drehmoment.

Bei der Ausführung nach den Fig. 7 und 8 sind am Außenumfang des Schraubenkopfes, und zwar ebenfalls am Übergangsabschnitt zwischen dem kegelstumpfförmigen Abschnitt und dem ebenen Kopfende des Schraubenkopfes 4, widerhakenartige oder sägezahnförmige Rippen 6 vorgesehen, deren Eingriffsenden in Eindrehrichtung der Schraube weisen. Diese Rippen 6 graben sich also in Eindrehrichtung in den, den Schraubenkopf umgebenden Bereich ein und sind daher nicht als Losdrehsicherung zu verstehen, wirken auch nicht in diesem Sinne, sondern dienen lediglich zur plötzlichen Erhöhung des Drehmomentes beim Eindrehen der Schraube.

Es ist für verschiedene Ausführungsvarianten der erfindungsgemäßen Schraube zweckmäßig, wenn der Öffnungswinkel einer Senköffnung in der zu befestigenden Platte oder Profilschiene oder eben in der Unterlegscheibe 3 kleiner ist als der Winkel des Senkkopfes des Schraubenkopfes 4. Dies ist im besonderen auch aus den Fig. 1 und 6 zu ersehen. Dabei ist es vorteilhaft, wenn dieser Öffnungswinkel in der Unterlegscheibe 3 gleich oder kleiner als 90° ist. Dadurch kann ein starker Eingriff einer an der Außenbegrenzung 7 des Schraubenkopfes vorgesehenen Rändelung 6 erreicht werden.

Mit den erfindungsgemäßen Maßnahmen ist eine optimale Setzsicherheit gewährleistet, wenn entsprechende Teile an einem Unterbau geringer Auszugsfestigkeit befestigt werden sollen. Es ist eine maschinelle Verschraubung möglich, ohne daß die Gefahr eines Überdrehens der Schraube gegeben wäre. Dadurch können in einfacher Weise also auch Schrauben mit großer Gewindesteigung ohne Probleme maschinell in relativ weiches Baumaterial eingedreht werden. Es ist daher auch keine Abhängigkeit von einer bestimmten Ausführung eines Schraubers gegeben, denn durch die erfindungsgemäßen Maßnahmen ist die Reibungserhöhung so groß, daß auch Schrauber ohne Feineinstellmöglichkeit für die Drehmomentkupplung eingesetzt werden können.

## Patentansprüche

1. Schraube aus einem Schaft mit großer Gewindesteigung und einem Schraubenkopf, zum Eindrehen in einen Unterbau geringer Auszugsfestigkeit, z.B. in Gasbeton, für die direkte Befestigung einer Unterlage in Form von Platten oder Profilschienen auf dem Unterbau oder für die indirekte Befestigung von Dicht- und/oder Isolierbahnen und/oder -platten unter Einsatz einer Unterlage in Form von großflächigen Unterlegscheiben auf dem Unterbau, **dadurch gekennzeichnet**, daß der Schraubenkopf (4) an seiner Außenbegrenzung (7) an einem zylinderförmigen Axialabschnitt eine in das Material der Unterlage (2, 3) eingreifende Rändelung (6) bzw. Zähne aufweist, welche beim unmittelbaren Kontakt mit der Unterlage (2, 3) das Eindrehmoment der Schraube plötzlich stark erhöht bzw. erhöhen.

2. Schraube nach Anspruch 1, dadurch gekennzeichnet, daß ein als Senkkopf ausgebildeter Schraubenkopf (4) an seinem Übergangsrand vom kegelstumpfförmigen Abschnitt zum ebenen Kopfende hin eine achsparallel zur Schraubenachse ausgerichtete Rändelung (6) aufweist.

3. Schraube nach Anspruch 1, dadurch gekennzeichnet, daß ein als Senkkopf ausgebildeter Schraubenkopf (4) an seinem freien Ende einen tellerartigen Flansch (9) aufweist, welcher an seinem Außenumfang (7) eine Rändelung (6) oder Zähne aufweist.

4. Schraube nach einem der Ansprüche 1 bis 3, dadurch gekennzeichnet, daß die frei radial auskragenden Enden der Rändelerhebungen (6) scharfkantige Schneiden bilden.

5. Schraube nach einem der Ansprüch 1 bis 3, dadurch gekennzeichnet, daß die Rändelerhebungen (6) die Mantelfläche des Senkkopfbereiches bzw. die Unterseite des tellerartigen Flansches (9) bzw. die Unterseite des Schraubenkopfes (4) geringfügig überragen.

6. Schraube nach Anspruch 1, dadurch gekennzeichnet, daß der Öffnungswinkel einer Senköffnung in einer zu befestigenden Platte oder Profilschiene oder in einer Unterlegscheibe (3) kleiner ist als der Winkel des Senkkopfes des Schraubenkopfes (4), wobei die Senköffnung vorzugsweise gleich oder kleiner als 90° ist.

## Claims

1. A screw, comprising a shank with a large thread pitch and a screw head, to be screwed into a substructure with low pull-out strength, for example into gas concrete, for the direct fastening of a support in the form of boards or profile rails on the substructure or for the indirect fastening of sealing and/or insulating sheets and/or slabs using a support in the form of large washers on the substructure, characterised in that on its outer boundary (7) the screw head (4) has on a cylindrical axial portion a knurled portion (6) or teeth which engages or engage into the material of the support (2, 3) and which, upon direct contact with the support (2, 3), suddenly substantially increases or increase the screwing-in torque of the screw.

2. A screw according to Claim 1, characterised in that a screw head (4) in the form of a countersunk head has on its transition edge from the frustoconical portion into the flat head end a knurled portion (6) aligned axially parallel to the screw axis.

3. A screw according to Claim 1, characterised in that a screw head (4) in the form of a countersunk head has at its free end a disc-like flange (9) which has a knurled portion (6) or teeth on its outer periphery (7).

4. A screw according to any one of Claims 1 to 3, characterised in that the freely radially projecting ends of the knurled projections (6) form sharp cutting edges.

5. A screw according to any one of Claims 1 to 3, characterised in that the knurled projections (6) protrude slightly beyond the circumferential surface of the countersunk-head region and/or the underside of the disc-like flange (9) and/or the underside of the screw head (4).

6. A screw according to Claim 1, characterised in that the aperture angle of a countersunk opening in a board or profile rail to be fastened or in a washer (3) is smaller than the angle of the countersunk head of the screw head (4), the countersunk opening preferably being equal to or less than 90°.

## Revendications

1. Vis réalisée à partir d'une tige avec un grand pas de filetage et une tête de vis servant à l'enfoncer en tournant dans un soubassement présentant une faible résistance d'extraction, par exemple dans un béton aéré, pour fixer directement un revêtement en forme de plaques ou de rails profilés sur le soubassement ou pour fixer indirectement des bandes d'étanchéité ou d'isolation et/ou des plaques en insérant une sous-couche ayant la forme de rondelles d'interposition à grande surface sur le soubassement, vis caractérisée en ce que la tête de la vis (4) présente sur son pourtour extérieur (7) sur une section axiale de forme cylindrique, un moletage (6) ou des dents qui viennent en prise dans la matière de la sous-couche (2, 3), moletage ou dents qui augmente ou augmentent soudain fortement le couple de rotation de la vis lors de l'entrée en contact direct avec la sous-couche (2, 3).

2. Vis selon la revendication 1, caractérisée en ce qu'une tête de vis (4) constituée sous la forme d'une tête d'enfoncement, présente sur son bord de transition allant de la section en forme de cône tronqué à l'extrémité plane de la tête, un moletage (6) orienté parallèlement à l'axe de la vis.

3. Vis selon la revendication 1, caractérisée en ce qu'une tête de vis (4) constituée sous la forme d'une tête à enfoncement (4) présente à son extrémité libre un flanc (9) en forme d'assiette, qui présente sur son pourtour extérieur (7) un moletage (6) ou des dents.

4. Vis selon l'une des revendications 1 à 3, caractérisée en ce que les extrémités sortant librement de façon radiale des saillies (6) du moletage forment des couteaux à arêtes aiguisées.

5. Vis selon l'une des revendications 1 à 3, caractérisée en ce que les saillies (6) du moletage dépassent légèrement la surface enveloppe de la zone de la tête d'enfoncement ou la face inférieure du flanc en forme d'assiette (9) ou la face inférieure de la tête de la vis (4).

6. Vis selon la revendication 1, caractérisée en ce que l'angle d'ouverture d'une ouverture d'enfoncement dans une plaque ou un rail profilé à fixer ou dans une rondelle (3) d'interposition est plus petit que l'angle de la tête d'enfoncement de la tête de vis (4), l'ouverture d'enfoncement étant de préférence égale à 90° ou plus petit.
